# EUROPÄISCHE PATENTSCHRIFT

(11) **EP 1 276 630 B1**
(45) Veröffentlichungstag und Bekanntmachung des Hinweises auf die Patenterteilung: **23.11.2005**
(21) Anmeldenummer: 01931393.1
(22) Anmeldetag: 03.04.2001
(51) Int. Cl.: B60K 31/10

(54) **VERFAHREN UND VORRICHTUNG ZUR EINSTELLUNG DER FAHRZEUGLÄNGSGESCHWINDIGKEIT AUF EINE SOLLGESCHWINDIGKEIT**
METHOD AND DEVICE FOR SETTING THE VEHICLE LONGITUDINAL VELOCITY TO A DESIRED SPEED
PROCEDE ET DISPOSITIF PERMETTANT DE REGLER LA VITESSE LONGITUDINALE D'UN VEHICULE A UNE VITESSE THEORIQUE

(30) Priorität: 17.04.2000 DE 10019181
(43) Veröffentlichungstag der Anmeldung: 22.01.2003
(73) Patentinhaber: ROBERT BOSCH GMBH, 70442 Stuttgart (DE)
(72) Erfinder: HELLMANN, Manfred, 71706 Hardthof (DE); WINNER, Hermann, 76467 Bietigheim (DE); LAUXMANN, Ralph, 79825 Korntal-Muenchingen (DE); IRION, Albrecht, 70563 Stuttgart (DE)
(86) Internationale Anmeldenummer: PCT/DE2001/001262
(87) Internationale Veröffentlichungsnummer: WO 2001/079017

(56) Entgegenhaltungen:
- EP-A- 1 020 316
- DE-A- 4 338 399
- US-A- 5 979 582

## Beschreibung

### Stand der Technik

Vorgeschlagen wird ein Verfahren und eine Vorrichtung zur Einstellung der Fahrzeuglängsgeschwindigkeit auf eine Sollgeschwindigkeit, insbesondere auf Basis einer Regelung, mit ansteuerbaren Bremseinheiten.

Die grundsätzliche Wirkungsweise eines derartigen Verfahrens und einer derartigen Vorrichtung zur Regelung der Geschwindigkeit oder Beschleunigung sind seit längerem unter der Bezeichnung adaptiver oder dynamischer Fahrgeschwindigkeitsregler, im Englischen als Adaptive Cruise Control (ACC),bekannt.
Eine grundsätzliche Beschreibung einer solchen Vorrichtung bzw. eines solchen Verfahrens ist beispielsweise in dem Aufsatz ,,Adaptive Cruise Controls - System Aspects and Development Trends" von Winner, Witte et al., veröffentlicht auf der SAE 96 vom 26. bis 29. Februar 1996 in Detroit (SAE-Paper No. 961010), enthalten.

Ein weiteres Verfahren und die zugehörige Vorrichtung werden beispielsweise in der DE 196 27 727 Al beschrieben, wobei hier bei der Wiederaufnahme der Regelung mit der ursprünglichen Sollgeschwindigkeit durch den Fahrer in wenigstens einem Betriebszustand verzögert wird. Ist bei der Wiederaufnahme die Fahrzeuggeschwindigkeit größer als die eingespeicherte Sollgeschwindigkeit, so hat der Fahrer durch die zeitliche Verzögerung der Wiederaufnahme die Möglichkeit, die Sollgeschwindigkeit zu verändern um eine unerwünschte Bremsreaktion zu verhindern.

In der gattungsbildenden DE 42 38 399 A1 ist ein Verfahren und eine Vorrichtung offenbart, die im Sinne Fahrgeschwindigkeitsregelung oder einer Fahrgeschwindigkeitsbegrenzung zusammenwirken. Bei diesem Verfahren wird abgeschätzt, ob eine Rücknahme der Motorleistung ausreicht um eine Sollgeschwindigkeit einzuhalten. Sollte das Schliessen der Drosselklappe nicht ausreichen um das Fahrzeug so zu verzögern, dass die Sollgeschwindigkeit eingehalten wird, so kann gegebenenfalls die Bremsleistung erhöht werden. Dieses Verfahren dient dazu, die Fahrgeschwindigkeit auf einer Sollgeschwindigkeit zu halten, ohne dabei einen Bremseingriff durch das Bremspedal vornehmen zu müssen.

### Aufgabe, Lösung und Vorteile der Erfindung

Bei den bekannten Fahrgeschwindigkeitsreglern wird in den allermeisten Fällen nur die Drosselklappe angesteuert um die Fahr-zeugistgeschwindigkeit auf eine Sollgeschwindigkeit zu regeln. Vereinzelt sind auch Fahrgeschwindigkeitsregler bekannt, die zudem die Bremseinrichtungen ansteuern können und damit die Geschwindigkeit auch bei Bergabfahrten konstant halten können.
Bei Fahrzeugen mit adaptivem Geschwindigkeitsregler kann, je nach Gegebenheit, sowohl die Drosselklappe als auch die Bremse angesteuert werden. Dies geschieht bei ACC-Systemen in Abhängigkeit der Geschwindigkeit oder in Abhängigkeit des Abstandes zum vorausfahrenden Fahrzeug, je nachdem ob sich das Fahrzeug im Abstands- oder im Geschwindigkeitsregelmodus befindet. Im Fall, dass man sich gerade im Geschwindigkeitsregelmodus befindet, also kein Fahrzeug im Sensorsichtbereich vorwegfährt, ist die Sollgeschwindigkeit gleich der vom Fahrer festlegbaren Setzgeschwindigkeit. Im Fall, dass sich das Fahrzeug im Abstandsregelmodus befindet, also das eigene Fahrzeug einem vorausfahrenden folgt, nähert sich die Fahrtgeschwindigkeit der Sollgeschwindigkeit an. Bei diesen ACC-Systemen wird daher immer dann ein automatischer Bremseneingriff vorgenommen, wenn die Fahrzeuglängsgeschwindigkeit größer als die Setzgeschwindigkeit ist. Nun existieren Situationen, in denen diese Regelreaktionen in Form von Bremseneingriffen ungewollt sind und den sowohl den Fahrer als auch den nachfolgenden Verkehr erschrecken und sogar gefährden.
Diese Situation tritt beispielsweise auf, wenn die Fahrzeuggeschwindigkeit bedeutend höher ist als die eingespeicherte Setzgeschwindigkeit und der Fahrer zur Wiedereinschaltung die Wiederaufnahme betätigt. Eine weitere Situation, in der diese Reaktion auftreten kann ist, wenn der Fahrer bei aktiver ACC-Regelung das Gaspedal tritt und somit das Fahrzeug auf eine bedeutend höhere Geschwindigkeit als die Setzgeschwindigkeit beschleunigt. In dem Moment, wenn der Fahrer das Gaspedal wieder zurücknimmt und die Fahrzeuggeschwindigkeit noch immer weit über der Setzgeschwindigkeit liegt, greift die ACC-Regelung wieder ein und bremst das Fahrzeug auf die Setzgeschwindigkeit ab, obwohl der Fahrer Mit dieser Reaktion nicht rechnet.
Die vorliegende Erfindung die durch die Merkmale der Ansprüche 1, 2 und 3 gekennzeichnet ist, soll dem Fahrverhalten eines versierten und erfahrenen Fahrers entsprechen, so daß in den beschriebenen Situationen das System anders reagiert als im Normalbetrieb. Ziel ist es, insbesondere in den speziellen Fällen der Wiederaufnahme und des Fahrerübertretens bei einer höheren Fahrzeuggeschwindigkeit als der Setzgeschwindigkeit, ein Ansteuern der Bremseinheiten zu unterlassen, solange kein Abbruchkriterium wie zweckmäßigerweise ein Hindernis im vorhergesagten Kursbereich des geregelten Fahrzeugs oder ein Überschreiten einer zeitlichen Begrenzung vorliegt.
Durch das erfindungsgemäße Verfahren und die zugehörige, erfindungsgemäße Vorrichtung wird die Reaktion eines natürlichen Fahrers in diesen speziellen Situationen nachgebildet, wodurch unerwartete und unnötige Bremsmanöver vermieden werden, die die Verkehrsteilnehmer erschrecken und gefährden könnten.

### Zeichnung und Beschreibung von Ausführungsbeispielen

Nachfolgend werden Ausführungsbeispiele der Erfindung anhand von vier Zeichnungen erläutert.
- Fig. 1: zeigt ein v-t-Diagramm, in dem die Fahrzeuglängsgeschwindigkeit gegen die Zeit aufgetragen ist, für den Fall der Wiederaufnahme bei dem die Resume-Delay-Funktion aktiviert wird.
- Fig.2: zeigt ein v-t-Diagramm, in dem die Fahrzeuglängsgeschwindigkeit gegen die Zeit aufgetragen ist, für den Fall des Fahrerübertretens (Suspend) mittels des Fahrpedals und anschließendes Verlangsamen durch Loslassen des Fahrpedals, wodurch die Suspend-Delay-Funktion aktiviert wird.
- Fig.3: zeigt ein Blockdiagramm, das aufzeigt, welche Bedingungen und Zustände zu den Resume-Delay- und Suspend-Delay-Betriebszuständen führen und wie diese beendet werden.

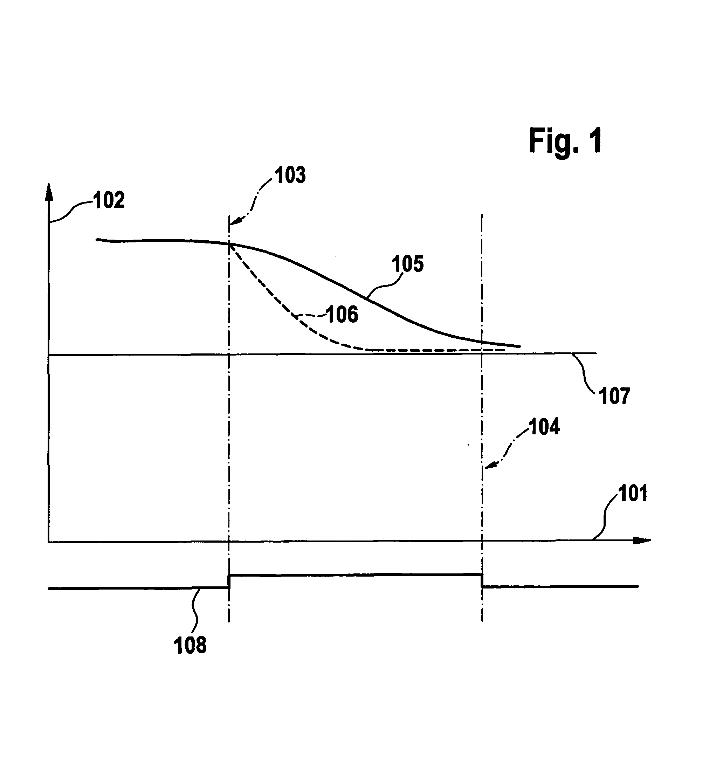

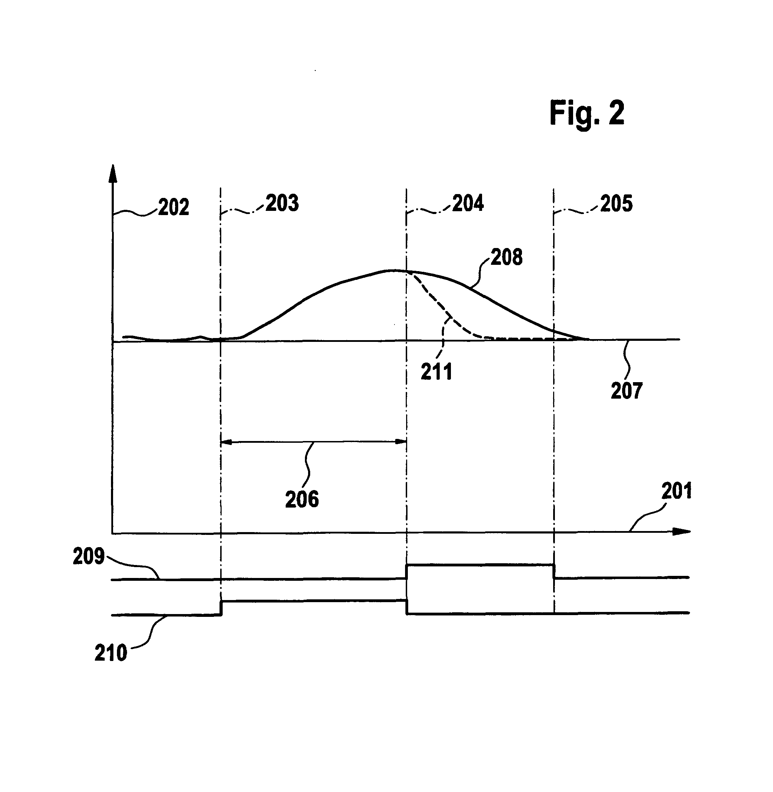

In Figur 1 wurde eine Geschwindigkeitsachse 102 gegen eine Zeit-achse 101 aufgetragen, wodurch ein v-t-Diagrammm gebildet wird. Die Kurve 105 zeigt die Fahrzeuglängsgeschwindigkeit vFzg in Abhängigkeit der Zeit auf, die das Fahrzeug zum Zeitpunkt t innehat. Die Kurve 107 stellt die Setzgeschwindigkeit vSet des adaptiven Fahrgeschwindigkeitsreglers gegen die Zeit t dar. Die Zeitachse wird durch die Linie 101 dargestellt. Die Linie 103 symbolisiert den Zeitpunkt, zu dem die Wiederaufnahme durch den Fahrer aktiviert wird. Aus Fig.1 ist ersichtlich, dass vor dem Zeitpunkt 103 die Fahrgeschwindigkeit vFzg 105 bedeutend höher ist als die Setzgeschwindigkeit vSet 104. Zum Zeitpunkt 103 wird die Wiederaufnahme aktiviert, wodurch der Regler wieder in das Fahrgeschehen eingreift. Da die Fahrgeschwindigkeit vFzg weit höher ist als die Setzgeschwindigkeit vSet 107 steuert der Regler im herkömmlichen Fall die Bremse an um das Fahrzeug auf die Setzgeschwindigkeit vSet einzustellen, wodurch ein Geschwindigkeitsprofil entsteht, wie es mittels der unterbrochenen Linie 106 dargestellt wurde. Ein menschlicher Fahrer würde in einer derartigen Situation anstatt mittels eines Bremseingriffes zu verzögern das Fahrzeug ausrollen lassen bis die Setzgeschwindigkeit vSet erreicht ist. Um dieses Verhalten nachzubilden wird ein Bremseneingriff unterbunden wodurch ein Geschwindigkeitsprofil entsteht, wie es durch die Kurve 105 dargestellt ist. Im unteren Teil dieses Diagramms ist der zeitliche Verlauf des Resume-Delay-Flags aufgetragen. Die Linie 108 stellt dar, zu welchen Zeitpunkten das Resume-Delay-Flag gesetzt ist. Als Zeit-achse wird in diesem Fall wieder die Achse 101 benutzt.
Gesetzt wird das Flag in dem Moment, wenn die Fahrzeuglängsgeschwindigkeit vFzg bedeutend größer ist als die Setzgeschwindigkeit vSet und die Wiederaufnahme, vorzugsweise durch Drücken der "Wiederaufnahme"-Taste, aktiviert wird. In diesem Zustand wird ein Bremseneingriff verhindert , solange keine Notwendigkeit besteht. Erkennt ein Sensor ein Hindernis auf der eigenen Fahrspur, so ist es sinnvoll, das "Resume-Delay"-Flag zurückzunehmen und einen Bremseneingriff zuzulassen. Ebenso ist es sinnvoll, das "Resume-Delay"-Flag zu löschen, wenn die Setzgeschwindigkeit vSet verändert wird, vorzugsweise wenn sie verringert wird oder wenn der "Resume-Delay"-Zustand länger anhält als ein maximaler, vorgebbarer Wert. Im Normalfall sollte das "Resume-Delay"-Flag erst dann zurückgenommen werden, wenn die Fahrzeuglängsgeschwindigkeit vFzg weniger als ein vorgebbares Ausmaß über der Setzgeschwindigkeit vSet liegt. Dieser Zeitpunkt wurde in Fig.1 mittels der Linie 104 aufgetragen, zu dem auch das "Resume-Delay"-Flag 108 zurückgenommen wird.
Eine weitere Situation in der ein Verhindern eines Bremseneingriffes sinnvoll ist, besteht wenn die Geschwindigkeitsregelung durch Treten des Fahrpedals übersteuert wird und die Fahrzeug-längsgeschwindigkeit bedeutend erhöht wird gegenüber der Setzgeschwindigkeit vSet. Dieser Fall ist im Weiteren als "Suspend-Delay"-Funktion beschrieben und in Fig.2 beschrieben. Auch in Fig.2 ist , wie in Fig.1, ein v-t-Diagramm dargestellt. Die Geschwindigkeitsachse wird durch 202 gebildet und die Zeitachse durch 201. Die Kurve 208 stellt die Fahrzeuglängsgeschwindigkeit vFzg in Abhängigkeit der Zeit t dar. 207 stellt die Setzgeschwindigkeit vSet des Fahrgeschwindigkeitsreglers dar.
Vor dem Zeitpunkt 203 schwankt die Fahrzeuggeschwindigkeit vFzg in etwa um die Setzgeschwindigkeit vSet. Zum Zeitpunkt 203 wird das Fahrpedal in Sinne einer Geschwindigkeitserhöhung betätigt wodurch sich die Fahrzeuggeschwindigkeit vFzg bedeutend gegenüber der Setzgeschwindigkeit vSet erhöht. Zur Zeitdauer 206 bleibt das Fahrpedal betätigt wodurch sich in diesem Zeitraum die Fahrzeuggeschwindigkeit immer weiter erhöht. Zum Zeitpunkt 205 wird das Fahrpedal wieder in die ursprüngliche Stellung zurückgenommen. Im herkömmlichen Betrieb greift die Regelung wieder ein verzögert durch einen Bremseneingriff die Geschwindigkeit auf die Setzgeschwindigkeit vSet herunter, wie es durch die Kurve 211 abgebildet ist. Durch die erfindungsgemäße Verhinderung eines Bremseneingriffes in dieser Situation wird das Fahrzeug nur durch den Fahrwiderstand und das Schleppmoment des Motors abgebremst wodurch die Geschwindigkeitskurve wie in 208 abklingt, also wesentlich langsamer abklingt als durch Kurve 211 aufgezeigt.
Zum Zeitpunkt 205 wird ist die Fahrzeuggeschwindigkeit vFzg so weit abgeklungen, dass die Fahrzeuglängsgeschwindigkeit vFzg weniger als ein vorgebbares Ausmaß über der Setzgeschwindigkeit vSet liegt. Dies ist auch, ähnlich wie im "Resume-Delay"-Fall, eines der Abbruchkriterien für den "Suspend-Delay"-Fall. Weitere Abbruchkriterien sind, das Überschreiten einer Zeitbegrenzung für diesen Betriebszustand, das Erkennen eines Hindernisses in der eigenen Fahrspur, Die Verringerung der Setzgeschwindigkeit durch Betätigung eines Bedienelementes oder die Deaktivierung des Abstands- und Geschwindigkeitsregelungssystems.
In Fig.2 sind im unteren Teil zwei Verläufe 209 und 210 dargestellt, die mit der Zeitachse und dem v-t-Diagramm korrespondieren. So stellt 209 das "Suspend-Delay"-Flag dar, das zum Zeitpunkt 204 gesetzt wird, wenn der Regler in die Geschwindigkeitsregelung wieder eingreift unter der Bedingung, dass die Fahrzeuglängsgeschwindigkeit bedeutend größer als die Setzgeschwindigkeit ist. Solange dieses "Suspend-Delay"-Flag gesetzt ist, wird ein Bremseneingriff verhindert, bis zum Zeitpunkt 205, zu dem dieses Flag zurückgesetzt wird, da die Fahrzeuggeschwindigkeit nicht mehr ausreichend größer ist als die Setzgeschwindigkeit. Die Linie 210 zeigt auf, in welchen Zeiträumen das Fahrpedal im Sinne eines Beschleunigungswunsches bedient wird. Das Fahrpedal wird zum Zeitpunkt 203 im Sinne einer Geschwindigkeitserhöhung betätigt, es bleibt für den Zeitraum 206 betätigt und zum Zeitpunkt 204 wird es wieder in die Ausgangsposition zurück bewegt.

Für den Fall, dass einer dieser beiden Betriebszustände "Resume-Delay" oder "Suspend-Delay" während einer Bergabfahrt aktiv ist, ist ein Bremseneingriff vorgesehen, der jedoch nur so stark ist, wie es das Gefälle erfordert um das Fahrzeug nicht weiter zu beschleunigen.

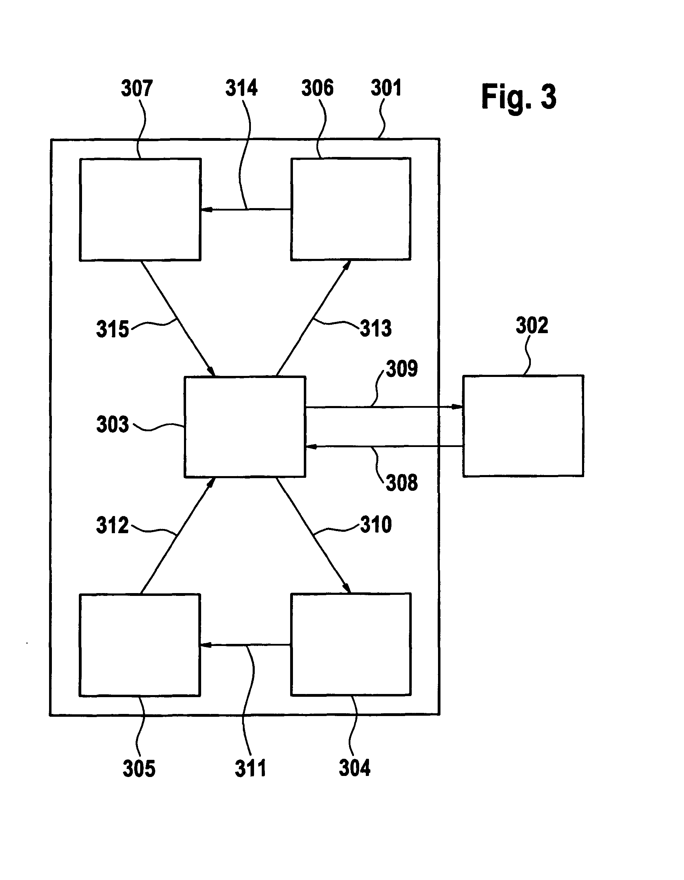

In Fig.3 sind die Zustände und Übergänge dargestellt, wie es zu den Zuständen "Resume-Delay" und "Suspend-Delay" kommen kann und wie diese Zustände wieder aufgelöst werden. So beschreibt der Bereich 301 ein aktives Fahrgeschwindigkeitsregelsystem im Gegensatz zu Block 302, der den Betriebszustand eines abgeschalteten Fahrgeschwindigkeitsreglers, der auch ein adaptiver Fahrgeschwindigkeitsregler (ACC) sein kann, darstellt. Der Block 303 innerhalb des Zustands 301 stellt den Normalbetriebsfall des Geschwindigkeitsreglers dar, im Hauptanspruch auch als erster Betriebszustand bezeichnet.

Der Übergang 308 vom abgeschalteten Zustand zum aktiven Norinalbetrieb stellt das Aktivieren mittels eines Einschaltbedienelementes dar. Umgekehrt stellt der Übergang 309 die Deaktivierung des Fahrgeschwindigkeitsreglers durch Betätigung eines Ausschaltbedienelementes, dar.

Aus Zustand 303 heraus sind 2 mögliche Zustände einnehmbar.

Der eine ist Zustand 304 der den Übergang 310 erreichbar ist. Der Übergang 310 tritt auf, wenn das Bremspedal durch den Fahrer betätigt wurde woraufhin das Geschwindigkeitsregelsystem deaktiviert wird und in den Zustand "Resume" also "Wiederaufnahme" übergeht. Wird in diesem Zustand, unter der Voraussetzung dass vFzg > vSet + delta ist, das Bedienelemente zur Wiederaufnahme betätigt, tritt der Übergang 311 auf, woraufhin der Zustand 305 "Resume-Delay" eingenommen wird, in dem ein Bremseingriff verhindert wird. Reduziert sich die Fahrzeuggeschwindigkeit vFzg unter vSet + delta, so wird der Zustand "Resume-Delay" aufgehoben und das Fahrzeug wird im normalen Regelmodus weitergeführt. Die zweite mögliche Zustand, der aus dem Normalbetriebszustand 303 aus eingenommen werden kann, ist der Zustand "Suspend" 306. Wird im Normalbetriebszustand 303 das Fahrpedal im Sinne einer Geschwindigkeitserhöhung bedient, so wird der Regelbetrieb unterbrochen und die Fahrzeuggeschwindigkeit vFzg erhöht sich auf einen Wert größer als vSet + delta, wodurch der Übergang 313 in den Zustand "Suspend" 306 überleitet. Wird im Darauffolgenden das Fahrpedal, bei immer noch erhöhter Geschwindigkeit, wieder zurückgenommen, wodurch die Übergangsbedingung 314 erfüllt wird, geht der Zustand "Suspend" 306 in den Zustand "Suspend-Delay" 307 über. Im Folgenden klingt die Fahrzeuggeschwindigkeit wieder langsam ab, bis die Übergangsbedingung 315 erfüllt ist, die vFzg < vSet + delta voraussetzt. In diesem Fall geht der Zustand "Suspend-Delay", der einen Bremseingriff verhindert, wieder in den Normalbetriebsfall 303 über, in dem ein Bremseneingriff vorhergesehen ist.

Die Betriebszustände 305 und 307 sind die beiden Zustände, die auch als zweite Betriebszustände bezeichnet sind. In diesen beiden Zuständen wird ein Bremseneingriff verhindert, um das Fahrverhalten eines menschlichen Fahrers nachzubilden und somit unerwartete Regelreaktionen des Fahrgeschwindigkeitsreglers zu verhindern. In diesen beiden Zuständen 305 und 307 ist es bei erkannter Bergabfahrt vorgesehen, dass dennoch ein Bremseneingriff vorgenommen wird um ein Beschleunigen des Fahrzeugs infolge des negativen Fahrwiderstandes zu verhindern.

Die beiden Sonderfälle des "Resume"-Betriebszustandes sowie des "Suspend"-Betriebszustandes werden somit in einheitlicher Art und Weise behandelt.

Es wurde durch das erfindungsgemäße Verfahren ein Fahrverhalten entwickelt, das dem eines menschlichen Fahrers entspricht und dadurch dem Fahrer logisch und nachvollziehbar erscheint. Dadurch kann das Fahrgeschwindigkeitsregelsystem in jeder Situation mit einem optimal angepaßten Betriebszustand betrieben werden, wodurch der Fahrer und die nachfolgenden Verkehrsteilnehmer keinen unnötigen Gefährdungen ausgesetzt werden.

## Patentansprüche

1. Verfahren zur Einstellung der Fahrzeuglängsgeschwindigkeit (105, 208) auf eine Sollgeschwindigkeit (107, 207) eines Fahrzeugs, insbesondere auf Basis einer Regelung, mit ansteuerbaren Bremseinheiten, bei dem
- bei Vorliegen wenigstens eines ersten Betriebszustands (303), bei dem die Fahrzeuglängsgeschwindigkeit (105, 208) die Sollgeschwindigkeit (107, 207) in einem vorgebbaren Ausmaß überschreitet, die Einstellung der Sollgeschwindigkeit (107, 207) durch Ansteuerung der Bremseinheiten geschieht, und
- bei Vorliegen wenigstens eines zweiten Betriebszustands (305,307), bei dem die Fahrzeuglängsgeschwindigkeit (105, 208) die Sollgeschwindigkeit (107, 207) in dem vorgebbaren Ausmaß überschreitet, die Einstellung der Sollgeschwindigkeit (107, 207) ohne Ansteuerung der Bremseinheiten geschieht
**dadurch gekennzeichnet, dass** der zweite Betriebszustand (305,307) dann eingeleitet wird,
- wenn die Fahrzeuglängsgeschwindigkeit (105, 208) die Sollgeschwindigkeit (107, 207) in dem vorgebbaren Ausmaß überschreitet und gleichzeitig das Bedienelement für die Wiederaktivierung der Geschwindigkeitseinstellung (311) betätigt wird (305) oder
- wenn die Fahrzeuglängsgeschwindigkeit (105, 208) die Sollgeschwindigkeit (107, 207), infolge einer Betätigung eines vom Fahrer des Fahrzeugs betätigbaren Mittels zur Geschwindigkeitswahl (214), insbesondere eines Fahrpedals, im Sinne einer Geschwindigkeitserhöhung, mindestens in dem vorgebbaren Ausmaß überschreitet (307).

2. Verfahren zur Einstellung der Fahrzeuglängsgeschwindigkeit (105, 208) auf eine Sollgeschwindigkeit (107, 207) eines Fahrzeugs, insbesondere auf Basis einer Regelung, mit ansteuerbaren Bremseinheiten, bei dem
- bei Vorliegen wenigstens eines ersten Betriebszustands (303), bei dem die Fahrzeuglängsgeschwindigkeit (105, 208) die Sollgeschwindigkeit (107, 207) in einem vorgebbaren Ausmaß überschreitet, die Einstellung der Sollgeschwindigkeit (107, 207) durch Ansteuerung der Bremseinheiten geschieht, und
- bei Vorliegen wenigstens eines zweiten Betriebszustands (305, 307), bei dem die Fahrzeuglängsgeschwindigkeit (105, 208) die Sollgeschwindigkeit (107, 207) in dem vorgebbaren Ausmaß überschreitet, die Einstellung der Sollgeschwindigkeit (107, 207) ohne Ansteuerung der Bremseinheiten geschieht
**dadurch gekennzeichnet, dass** der zweite Betriebszustand (305, 307) beendet wird, wenn
- die Fahrzeuglängsgeschwindigkeit (105, 208) die Sollgeschwindigkeit (107, 207) um weniger als das vorgebbare Ausmaß überschreitet (312, 315) oder
- eine zeitliche Begrenzung des Vorliegens des zweiten Betriebszustandes überschritten wird oder
- der Fahrer durch Betätigung von mindestens einem Bedienelement die Sollgeschwindigkeit verringert oder
- der Fahrer das System zur Geschwindigkeitseinstellung durch Betätigung mindestens eines Bedienelementes zur Systemdeaktivierung oder durch Betätigung einer Bremsvorrichtung deaktiviert (309) oder
- ein am Fahrzeug angebrachter Abstands- und Geschwindigkeitssensor, zweckmäßigerweise ein ACC-Sensor, ein Hindernis auf der eigenen Fahrspur erkennt, dessen Entfernung geringer als ein vorgebbarer Abstand ist.

3. Vorrichtung zur Regelung der Fahrzeuglängsgeschwindigkeit wobei die Vorrichtung Mittel Ausführung des Verfahrens nach einem der vorhergehenden Ansprüche umfasst.

## Claims

1. Method for setting the longitudinal velocity (105, 208) of a vehicle to a desired velocity (107, 207) of a vehicle, in particular on the basis of a regulating process, having actuable brake units, in which,
- when at least one first operating state (303) in which the longitudinal velocity (105, 208) of the vehicle exceeds the desired velocity (107, 207) to a predefinable degree is present, the desired velocity (107, 207) is set by actuating the brake units, and
- when at least one second operating state (305, 307) in which the longitudinal velocity (105, 208) of the vehicle exceeds the desired velocity (107, 207) to the predefinable degree is present, the desired velocity (107, 207) is set without actuating the brake units,
**characterized in that** the second operating state (305, 307) is initiated
- if the longitudinal velocity (105, 208) of the vehicle exceeds the desired velocity (107, 207) to the predefinable degree and at the same time the operator control element is actuated (305) in order to reactivate the velocity-setting means (311), or
- if the longitudinal velocity (105, 208) of the vehicle exceeds (307) the desired velocity (107, 207) as a result of a velocity selection means (214) which can be activated by the driver of the vehicle, in particular an accelerator pedal, being activated with the effect of increasing the velocity, at least to the predefinable degree.

2. Method for setting the longitudinal velocity (105, 208) of a vehicle to a desired velocity (107, 207) of a vehicle, in particular on the basis of a regulating process, having actuable brake units, in which,
- when at least one first operating state (303) in which the longitudinal velocity (105, 208) of the vehicle exceeds the desired velocity (107, 207) to a predefinable degree is present, the desired velocity (107, 207) is set by actuating the brake units, and
- when at least one second operating state (305, 307) in which the longitudinal velocity (105, 208) of the vehicle exceeds the desired velocity (107, 207) to the predefinable degree is present, the desired velocity (107, 207) is set without actuating the brake units,
**characterized in that** the second operating state (305, 307) is terminated if
- the longitudinal velocity (105, 208) of the vehicle exceeds (312, 315) the desired velocity (107, 207) by less than the predefinable degree, or
- a chronological limitation of the presence of the second operating state is exceeded or
- the driver reduces the desired velocity by activating at least one operator control element or
- the driver deactivates (309) the system for setting the velocity by activating at least one operator control element for deactivating the system or by activating a brake device, or
- a distance and velocity sensor, expediently an ACC sensor, which is mounted on the vehicle detects an obstacle whose distance is less than a predefinable distance in the driver's own lane.

3. Device for regulating the longitudinal velocity of a vehicle, wherein the device comprises means for carrying out the method according to one of the preceding claims.

## Revendications

1. Procédé de réglage de la vitesse longitudinale d'un véhicule (105, 208) à une vitesse de consigne (107, 207) d'un véhicule, en particulier sur la base d'une régulation, comprenant des unités de freinage pouvant être commandées, selon lequel
- en présence d'au moins un premier état de fonctionnement (303), dans lequel la vitesse longitudinale du véhicule (105, 208) dépasse la vitesse de consigne (107, 207) d'une valeur pouvant être prédéterminée, le réglage de la vitesse de consigne (107, 207) s'effectue par la commande des unités de freinage, et
- en présence d'au moins un deuxième état de fonctionnement (305, 307), dans lequel la vitesse longitudinale du véhicule (105, 208) dépasse la vitesse de consigne (107, 207) de la valeur pouvant être prédéterminée, le réglage de la vitesse de consigne (107, 207) s'effectue sans la commande des unités de freinage,
**caractérisé en ce que**
le deuxième état de fonctionnement (305, 307) commence lorsque
- la vitesse longitudinale du véhicule (105, 208) dépasse la vitesse de consigne (107, 207) de la valeur pouvant être prédéterminée et dans le même temps, l'élément de commande pour la réactivation du réglage de la vitesse (311) est actionné (305), ou
- la vitesse longitudinale du véhicule (105, 208) dépasse (307) la vitesse de consigne (107, 207) au moins de la valeur pouvant être prédéterminée, à la suite d'un actionnement d'un moyen de sélection de la vitesse (214) pouvant être actionné par le conducteur du véhicule, en particulier une pédale d'accélérateur, dans le sens d'une augmentation de vitesse.

2. Procédé de réglage de la vitesse longitudinale d'un véhicule (105, 208) à une vitesse de consigne (107, 207) d'un véhicule, en particulier sur la base d'une régulation, comprenant des unités de freinage pouvant être commandées, selon lequel
- en présence d'au moins un premier état de fonctionnement (303), dans lequel la vitesse longitudinale du véhicule (105, 208) dépasse la vitesse de consigne (107, 207) d'une valeur pouvant être prédéterminée, le réglage de la vitesse de consigne (107, 207) s'effectue par la commande des unités de freinage, et
- en présence d'au moins un deuxième état de fonctionnement (305, 307), dans lequel la vitesse longitudinale du véhicule (105, 208) dépasse la vitesse de consigne (107, 207) de la valeur pouvant être prédéterminée, le réglage de la vitesse de consigne (107, 207) s'effectue sans la commande des unités de freinage,
**caractérisé en ce que**
le deuxième état de fonctionnement (305, 307) se termine lorsque
- la vitesse longitudinale du véhicule (105, 208) dépasse la vitesse de consigne d'une valeur inférieure à la valeur pouvant être prédéterminée (312, 315), ou
- une limitation temporelle de présence du deuxième état de fonctionnement est dépassée ou
- le conducteur réduit la vitesse de consigne par l'actionnement d'au moins un élément de commande, ou
- le conducteur désactive (309) le système de réglage de la vitesse par l'actionnement d'au moins un élément de commande permettant la désactivation du système ou par l'actionnement d'un dispositif de freinage, ou
- un capteur de vitesse et de distance monté sur le véhicule, de préférence un capteur ACC, détecte un obstacle sur la voie de circulation du véhicule, dont la distance est inférieure à une distance pouvant être prédéterminée.

3. Dispositif de réglage de la vitesse longitudinale d'un véhicule, le dispositif comprenant des moyens pour mettre en oeuvre le procédé selon l'une des revendications précédentes.
